# FASCICULE DE BREVET EUROPEEN

(11) **EP 1 216 921 B1**
(45) Date de publication et mention de la délivrance du brevet: **12.10.2005**
(21) Numéro de dépôt: 01403307.0
(22) Date de dépôt: 20.12.2001
(51) Int. Cl.: B64D 27/26, B64D 27/18

(54) **Pièce de suspension d'un turboréacteur**
Aufhängungsteil für ein Turbinentriebwerk
Turbojet engine mounting part

(30) Priorité: 21.12.2000 FR 0016734
(43) Date de publication de la demande: 26.06.2002
(73) Titulaire: SNECMA, 75015 Paris (FR)
(72) Inventeur: Brefort, Francois, 77540 Bernay (FR); Chevallier, Lydie, 77150 Lesigny (FR); Picard, Jean-Louis, 77000 Vaux le Penil (FR); Pasquer, Félix Jean-Claude, 77127 Lieusaint (FR)

(56) Documents cités:
- EP-A- 0 744 338
- FR-A- 2 680 353

## Description

Le sujet de cette invention est une pièce de suspension d'un turboréacteur.

On se reportera notamment au brevet français 2 682 353 pour découvrir un exemple existant d'une telle suspension. Elle comprend une pièce allongée appelée ferrure, ou porte-manteau d'après sa forme, que l'invention entend perfectionner et qui s'étend entre un mât fixe ou une structure analogue et le turboréacteur à soutenir. Quatre éléments de fixation comprenant des vis et des écrous à barillet sont disposés aux coins de la ferrure pour la lier à la structure fixe. Cette ferrure s'étend transversalement et porte des bielles à ses extrémités, qui sont articulées également au turboréacteur ; une troisième bielle s'étend entre le centre de la ferrure et une portion du turboréacteur pour fournir un soutien de secours si une des bielles extrêmes se rompt.

Mais la ferrure doit elle-même être protégée de la rupture, car une chute du turboréacteur serait alors plus probable qu'avec une rupture de bielle. Elle doit notamment résister aux forces verticales, transversales et aux moments autour de l'axe du turboréacteur dans des conditions de service variées, y compris quand une aube du turboréacteur se détache et que des déséquilibres dynamiques importants apparaissent. Cette situation produit des forces considérables mais qu'on peut assez bien estimer pour dimensionner la ferrure. Le phénomène peut-être le plus à craindre est pourtant la fatigue en service normal, qui peut faire naître des fissures dont la progression finit par couper la ferrure même sous des charges faibles ; il n'est donc guère utile de chercher à se prémunir contre ces fissures en renforçant la ferrure, qu'on cherche au contraire à maintenir à un poids et un encombrement modérés.

La conception à la racine de l'invention est donc de dimensionner la ferrure pour qu'elle résiste aux efforts statiques extrêmes, sans que des renforcements soient ajoutés pour empêcher l'apparition des fissures de fatigue ; cependant, on a prévu un moyen de limiter leur progression en faisant qu'elles ne coupent jamais la ferrure en deux morceaux comparables, mais qu'elles ne puissent rendre inopérant qu'un des quatre éléments de fixation au mât. On arriverait alors une situation où le soutien du turboréacteur s'effectuerait par les trois éléments restants, c'est-à-dire dans des conditions normales d'un côté et avec un élément de fixation unique pour reprendre les efforts sur la bielle correspondante de l'autre côté. Ce dernier élément serait alors soumis à des contraintes mécaniques plus fortes, mais qui resteraient inférieures aux contraintes extrêmes prévues, et la ferrure conserverait pour l'essentiel sa cohésion.

Cette attitude diffère complètement de celle qui avait conduit à la proposition décrite dans le brevet susmentionné, et qui consistait à diviser la ferrure en deux éléments parallèles pour continuer de fournir un soutien si l'un se rompait. La conséquence était soit un alourdissement de la ferrure si chaque élément devait résister aux efforts statiques, soit un affaiblissement consécutif à la division.

Pour résumer, l'invention est relative à une pièce de suspension d'un turboréacteur, disposée horizontalement entre une structure fixe et au moins deux bielles articulées au turboréacteur, et comprenant deux extrémités munies de deux éléments, juxtaposés dans une direction de largeur de la pièce, de fixation à la structure fixe, les extrémités étant façonnées en deux paires de chapes encadrant respectivement les bielles et comprenant chacune un des éléments de fixation et un palier de tourillon de bielle situé au-dessous dudit élément de fixation, caractérisé en ce que des fentes traversant les extrémités de la pièce s'étendent entre les chapes, sans s'étendre sur une portion centrale de la pièce.

Avantageusement, les chapes sont plus épaisses aux éléments de fixation qu'aux paliers de tourillon et comprennent une surépaisseur au-dessus des bielles.

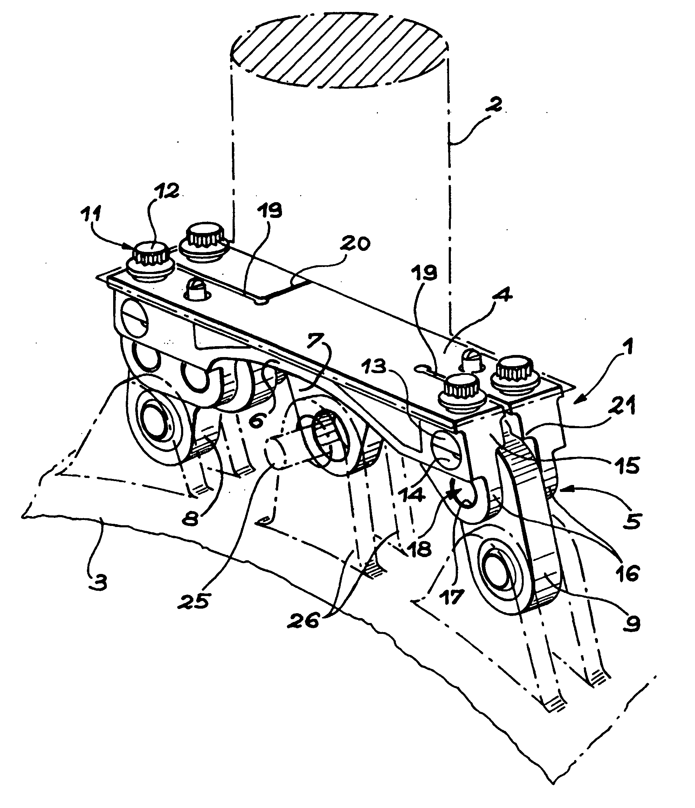

L'invention va maintenant être décrite en liaison à la figure unique qui représente la pièce de suspension en perspective.

La pièce de suspension ou ferrure, qui porte la référence 1, s'étend entre un mât 2 qui est une structure fixe d'avion et une section arrière d'un turboréacteur dont on a ébauché la représentation du carter 3. Elle est disposée horizontalement et a une forme allongée ; elle comprend principalement une plaque supérieure 4 et des paires de chapes 5 qui s'étendent à ses extrémités ; des nervures 6 longitudinales relient les chapes 5 correspondantes entre elles et un support triangulaire 7 est encore disposée sous la plaque 4. Les paires de chapes 5 portent des bielles respectives 8 et 9 de support du turboréacteur 3, auquel elles sont articulées par leurs extrémités inférieures. Une chape verticale ou support triangulaire 7 est articulée à une paire de chapes centrales 26 du turboréacteur 3 par un axe 25 monté avec jeu. A chacun des coins de la pièce de suspension 1 est disposé un élément de fixation 11 qui permet de la soutenir par le mât 2 et qui comprend une vis 12 dont l'extrémité est engagée dans un écrou à barillet 13 (à section en demi-lune) disposé horizontalement à travers un perçage 14 d'une portion supérieure 15 de la chape 5 correspondante ; les chapes 5 comprennent encore une portion inférieure 16 à travers laquelle est ménagée un perçage 17 de réception d'un tourillon 18 de la bielle 8 ou 9.

Un élément essentiel de l'invention est une fente 19 qui s'étend à travers chacune des extrémités de la plaque supérieure 4 entre les chapes 5 et s'étend sur une portion de la plaque 4, au moins jusqu'au bout des chapes 5, dans la direction d'allongement principale de la pièce 1. Les éléments de fixation 11 voisins et juxtaposés dans la direction de longueur de la pièce 1 sont alors séparés. Toutefois, il est conforme à l'invention que les fentes 19, bien qu'elles soient dirigées l'une vers l'autre, ne se joignent pas afin que la pièce de suspension 1 reste unitaire et n'ait donc pas à être alourdie de boulons de liaison ou d'éléments analogues. Le rôle technique des fentes 19 est de limiter la propagation de fissures telles que la fissure 20, qui peuvent apparaître par fatigue en raison des efforts que la pièce de suspension 1 doit transmettre entre les bielles 8 et 9 et les éléments de fixation 11, pour progresser transversalement d'un bord de grand côté de la plaque 4 à l'autre, en les arrêtant. Quand la fissure 20 a atteint la fente 19, elle a alors séparé une portion de la pièce de suspension 1 du reste de celle-ci, et généralement isolé un des éléments de fixation 11, dont le rôle de soutien du turboréacteur 3 est alors réduit, surtout si la fissure 20 a atteint le perçage 14, qui est alors susceptible de s'ouvrir ; mais les trois autres éléments de fixation 11 continuent d'appartenir à un même morceau compact de la pièce de suspension 1 et de servir comme auparavant. Les dimensions de la pièce de suspension 1 en général et des chapes 5 en particulier sont choisies pour cela, et notamment les portions supérieures 15 des chapes 5 ont une épaisseur suffisante pour continuer de résister aux efforts du turboréacteur 3 même si des efforts ne passent plus que par une des chapes 5 de la paire. Une surépaisseur 21 de la portion supérieure 15 est localisée du côté interne des chapes 5, au-dessus des bielles 8 ou 9, sans qu'on ait à accroître la largeur globale de la pièce de suspension 1. C'est pourquoi la portion inférieure 16 de support des bielles 8 et 9 est placée au-dessous de la portion supérieure 15, avec l'avantage supplémentaire que le moment produit par le porte-à-faux entre la bielle 8 ou 9 et l'élément de fixation 11 qui subsiste quand l'autre a fait défaut reste modéré, ce qui évite d'introduire des contraintes de flexion excessives dans les chapes 5.

Les fentes 19 s'étendent devant les endroits de la pièce de suspension 1 où des concentrations de contrainte existent et où les fissures sont susceptibles de s'amorcer, c'est-à-dire au-dessus des chapes 5 et des tourillons 18, et entre les éléments de fixation 11. La partie centrale de la pièce de suspension 1 est moins contrainte et peut donc rester dépourvue de fentes 19, puisque les fissures ne risquent guère de s'y développer. On remarque d'ailleurs que les nervures 6 sont en forme de voûte, basses sous le centre de la plaque 4 et hautes en s'approchant des chapes 5.

Pour récapituler, on constate que l'invention permet de maintenir le service de la pièce de suspension 1 sans danger même sous fissuration par fatigue sans qu'on ait eu à accroître son encombrement, son poids ou sa complexité.

## Revendications

1. Pièce (1) de suspension d'un turboréacteur (3), disposée horizontalement entre une structure fixe (2) et au moins deux bielles (8, 9) articulées au turboréacteur, et comprenant deux extrémités munies de deux éléments (11), juxtaposés dans une direction de largeur de la pièce, de fixation à la structure fixe (2), les extrémités étant façonnées en paires de chapes (5) encadrant respectivement les bielles (8, 9) et comprenant chacune un des éléments de fixation (11) et un palier (17) de tourillon (18) de bielle (8, 9) situé au-dessous dudit élément de fixation (11), **caractérisée en ce que** des fentes (19) traversent les extrémités de la pièce s'étendant entre les chapes (5), sans s'étendre sur une portion centrale de la pièce (1).

2. Pièce de suspension selon la revendication 1, **caractérisée en ce que** les chapes (5) sont plus épaisses (15) aux éléments de fixation (11) qu'aux paliers (17) de tourillon (18) et comprennent une surépaisseur (21) au-dessus des bielles (8, 9).

## Patentansprüche

1. Aufhängung (1) für ein Turbotriebwerk (3), die horizontal zwischen einem festen Aufbau (2) und mindestens zwei an dem Turbotriebwerk angelenkten Stangen (8, 9) angeordnet ist und zwei Enden aufweist, die mit zwei in der Richtung der Breite der Aufhängung aneinandergrenzenden Elementen (11) zur Befestigung an dem festen Aufbau (2) versehen ist, wobei die Enden als Paare von Gelenkhalterungen (5) gebildet sind, die die Stangen (8, 9) einrahmen und jeweils eines der Befestigungselemente (11) und ein Lager (17) für den Drehzapfen (18) der Stangen (8, 9) unter diesem Befestigungselement (11) aufweisen,
**dadurch gekennzeichnet,**
**dass** sich zwischen den Gelenkhalterungen (5) Schlitze (19) erstrecken, die durch die Enden der Aufhängung verlaufen, ohne sich auf einen mittleren Abschnitt der Aufhängung (1) zu erstrecken.

2. Aufhängung nach Anspruch 1,
**dadurch gekennzeichnet,**
**dass** die Gelenkhalterungen (5) an den Befestigungselementen (11) stärker sind als an den Lagern (17) für die Drehzapfen (18) und über den Stangen (8, 9) eine Überdicke (21) aufweisen.

## Claims

1. Suspension part (1) for mounting a turbojet engine (3) arranged horizontally between a fixed structure (2) and at least two connecting rods (8, 9) articulated to the turbojet engine and comprising two ends equipped with two elements (11), juxtaposed in a widthwise direction of the part, for fixing to the fixed structure (2), the ends being shaped into pairs of yokes (5) respectively flanking the connecting rods (8, 9) and each comprising one of the fixing elements (11) and a bearing (17) of a journal (18) of a connecting rod (8, 9) which bearing is situated underneath the said fixing element (11), **characterized in that** slots (19) pass through the ends of the part run between the yokes (5) without running over a central portion of the part (1).

2. Suspension part according to Claim 1, **characterized in that** the yokes (5) are thicker (15) at the fixing elements (11) than they are at the bearings (17) of the journal (18) and have an additional thickness (21) over the connecting rods (8, 9).
